# EUROPEAN PATENT APPLICATION

(11) **EP 2 354 994 A1**
(43) Date of publication of application: **10.08.2011**
(21) Application number: 09306347.7
(22) Date of filing: 30.12.2009
(51) Int. Cl.: G06F 21/00

(54) **Secure signature creation application using a TPM comprising a middleware stack**

(71) Applicant: Gemalto SA, 92190 Meudon (FR)
(72) Inventor: Gaston, Lorenzo, 92190, Meudon (FR)

(57) **Abstract**

The invention relates to a Trusted Platform Module (TPM) set to authenticate a signature application (APP) and to open a secure channel with the signature application (APP). The Trusted Platform Module is also set to authenticate a signature device (SC) and to open a secure channel with the signature device (SC). The Trusted Platform Module embeds a middleware in order to translate signature orders from the signature application (APP) into signature orders for the signature device (SC).

The invention also relates to a system comprising a computing device and a signature device, and to a method for signing data.

## Description

The invention relates to a Trusted Platform Module, to a system comprising a computing device and a signature device, as well as to a method for signing data.

Signature devices are electronic devices, which can typically be easily carried by an individual (they are usually portable), and which can receive signature orders from other entities (typically computing devices such as personal computers or cell phones). The signatures generated by signature devices are typically carried out with an asymmetric cryptography algorithm such as RSA, DSA, or elliptic curves, for example. The data signed by signature devices may be for example electronic documents (for example PDF or Word documents containing a contract, or scanned copies of a contract, or any other type of document which may need to be signed), but also e-mails, web pages, slide presentations, or any computer files (spreadsheets, pictures, executable computer programs, etc.). The signature operation typically takes place as follows. First, data to be signed are typically hashed using a hashing algorithm such as SHA-1. Then the hash is typically padded (e.g. with a PKCS#1 padding such as RSASSA-PSS, which stands for RSA Signature Scheme with Appendix - Probabilistic Signature Scheme). The padded hash is then typically processed by the asymmetric cryptographic algorithm, via a private key operation (e.g. RSA private key operation). The result is the signature of the document with the private asymmetric key. The signature can be later checked with the public key corresponding to the private key used during the signature operation. The aim of the signature is typically to demonstrate that the contents of the signed data are approved by the signatory. Since the technology is more and more mature, and since managing electronic signatures is a lot easier and quicker than managing handwritten signatures, it is desired to encourage the use of electronic signatures. However, there is always a potential security risk which must be minimized. So while some countries have attempted to grant a legal value to electronically produced signatures (due to their convenience), this is subject to certain conditions. Indeed, very weak electronic signatures have no value as then can be very easily forged by ill-intentioned individuals. An example of initiative to define the requirements for electronic signatures is the European directive 1999/93/EC of the European parliament and of the council of 13 December 1999 on a community framework for electronic signatures. This directive has now been transposed in many countries, for example in France. The directive defines 'electronic signature' in very general terms as data in electronic form which are attached to or logically associated with other electronic data and which serve as a method of authentication. This could be interpreted very broadly as covering very insecure techniques such as the one consisting in writing your name at the end of an email. However it is very easy to write somebody else's name, and this type of electronic signature is of almost no value. The directive therefore defines an 'advanced electronic signature', as an electronic signature which meets the following requirements:
(a) it is uniquely linked to the signatory;
(b) it is capable of identifying the signatory;
(c) it is created using means that the signatory can maintain under his sole control; and
(d) it is linked to the data to which it relates in such a manner that any subsequent change of the data is detectable;

The directive states that advanced electronic signatures which are based on a qualified certificate and which are created by a secure signature-creation device can be regarded as legally equivalent to handwritten signatures if the requirements for handwritten signatures are fulfilled.

The directive does not say what the secure signature-creation device should be (in particular, it seems that it could be either hardware or software, despite the term "device"), however it defines requirements for secure signature-creation devices, namely:
1. Secure signature-creation devices must, by appropriate technical and procedural means, ensure at the least that:
   (a) the signature-creation-data used for signature generation can practically occur only once, and that their secrecy is reasonably assured;
   (b) the signature-creation-data used for signature generation cannot, with reasonable assurance, be derived and the signature is protected against forgery using currently available technology;
   (c) the signature-creation-data used for signature generation can be reliably protected by the legitimate signatory against the use of others.
2. Secure signature-creation devices must not alter the data to be signed or prevent such data from being presented to the signatory prior to the signature process.

Common examples of signature devices (which could be used as secure signature-creation devices) comprise portable tokens such as smart cards, USB keys, MMC or SD cards equipped with processing means or proper hardwired logic, etc. Smart cards have various applications (e.g. bank cards for financial applications, SIM cards for mobile telephony, contact-less cards such as Navigo for public transportation, healthcare cards such as Sesame Vitale, etc.). Smart cards can implement a contact interface, a contact-less interface, or both contact and contact-less interfaces. They can also offer different types of interfaces in the same category (e.g. ISO 7816 and USB are both contact interfaces which can be simultaneously supported by a given smart card).

Portable tokens typically offer security features allowing them to protect access to their commands based on access conditions. An entity willing to read certain private data from such portable token may be denied access if it does not prove its knowledge of a PIN code or of a cryptographic key, while the same entity could be authorized to read public data or to call all sorts of innocuous commands. On ISO 7816 compliant portable tokens, access conditions defining the level of protection of commands giving access to sensitive data or/and services, including cryptographic services such as electronic signature, is mainly performed via ISO/IEC 7816-4 security architecture (see for example clause 5.4). Security attributes are attached for example to data (data comprise files and logical data structures), or to cryptographic objects (including objects nested in files or in logical data structures), and typically comprise access mode bytes and related security conditions. Such security attributes are generally nested in a File Control Parameter template (see for example clause 5.3.3).

Portable tokens are therefore advantageous in the context of electronic signatures since they typically allow good protection levels of the cryptographic keys and of the access to the electronic signature computation.

In order to access a signature device from a computing device, it is necessary to connect the signature device to the computing device (for example, if the signature device is a smart card, via a contact or contact-less smart card reader plugged into or embedded in the computing device). Low level software components (drivers) are typically needed in the computing device in order to be able to communicate with the signature device. However, there is also typically a need for higher level software called middleware. In the field of signature devices, a middleware is a layer, often in the form of a library (for example a Dynamic Link Library or DLL, in Microsoft Windows environments), which translates high level requests (such as "sign this document") into series of lower levels commands understandable by a signature device (for example, for a smart card, into series of APDU commands selecting the appropriate keys, computing some hash - if not done in the computing device - and finally carrying out the expected signature computation).

Different standards (or de facto standards) have been defined for middleware. One of the oldest de facto standards is certainly PKCS#11 (public key cryptographic standard number 11) which defines a platform-independent API to cryptographic tokens, such as Hardware Security Modules (HSM) and all kinds of portable tokens with cryptographic features such as smart cards. The PKCS#11 standard names the API "Cryptoki" which is derived from "cryptographic token interface", but "PKCS#11" is often used to refer to the API as well as the "standard" that defines it. PKCS#11 defines a number of functions for managing electronic signatures, in particular:
- C_Signlnit, which initializes a signature operation,
- C_Sign, which signs single-part data,
- C_SignUpdate, which continues a multiple-part signature operation,
- C-SignFinal, which finishes a multiple-part signature operation,
- C_SignRecoverlnit, which initializes a signature operation, where the data can be recovered from the signature,
- C_SignRecover, which signs single-part data, where the data can be recovered from the signature

Of course, a number of other PKCS#11 operations are needed before calling the C_Sign (and similar) functions, such as initializing the PKCS#L API, opening a session, or logging in to a cryptographic token.

PKCS#11 is typically provided in the form of a library (e.g. DLL), and PKCS#11 compatible applications (such as Netscape browsers, Mozilla Firefox browsers, Mozilla Thunderbird email clients, OpenSSL, TrueCrypt disk encryption software, etc.) can typically be configured to recognize a cryptographic token as long as a PKCS#11 middleware is available for this cryptographic token, and as long as proper configuration has been carried out, e.g. the PKCS#11 middleware name and path are written in the application (e.g. through a configuration menu).

Another de facto standard is the Cryptographic Application Programming Interface (also known as CryptoAPl, Microsoft Cryptography API, or CAPI), which is an application programming interface included with Microsoft Windows operating systems that provides services to enable developers to secure Windows-based applications using cryptography. It is a set of dynamically-linked libraries that provides an abstraction layer allowing programmers to sign or encrypt data without having to understand the mathematical concepts involved during such cryptographic operations. CryptoAPl supports both public-key and symmetric key cryptography. It includes functionality for electronically signing data using digital certificates. CryptoAPl involves a number of CSPs (Cryptographic Service Providers) installed on the computing device. CSPs perform cryptographic functions, or delegate the computation of cryptographic functions to another entity such as a portable token, e.g. a smart card. It is therefore possible to install a CSP developed for a particular portable token, for example in order to compute an electronic signature of a Microsoft Office (Word, Excel, etc.) document, or to sign emails with Microsoft Outlook, with the particular portable token.

A CSP typically comprises a function CryptCreateHash to get a handle to a hash object, a function CryptHashData which directs a data stream to a hash object, and a function CryptSignHash which signs a hash value created for example with the two previous functions, which results in the electronic signature of the data stream.

Another emerging standard is ISO/IEC 24727-3. ISO/IEC 24727 is a set of programming interfaces for interactions between integrated circuit cards (ICCs), which are a type of portable tokens, and external applications, to include generic services for multi-sector use. The organization and the operation of the ICC need to conform to ISO/IEC 7816-4. ISO/IEC 24727 is relevant to ICC applications desiring interoperability among diverse application domains. ISO/IEC 24727-3:2008 defines services as representations of action requests and action responses to be supported at the client-application service interface. The services are described in a programming language independent way. ISO/IEC 24727-3:2008 is the application interface of the Open Systems Interconnection Reference Model defined in ISO/IEC 7498-1. It provides a high-level interface for a client-application making use of information storage and processing operations of a card-application as viewed on the generic card interface. ISO/IEC 24727-3 can be used in particular for carrying out electronic signatures with an ICC.

One problem with state of the art solutions for carrying out electronic signatures is that, while very secure signature devices exist, it is hard to have a very secure environment, in particular to have a secure computing device. Indeed, a signature device being a distinct physical entity with a specific purpose, it can be protected at its boundaries, and there are certifications such as Common Criteria which can demonstrate that a signature device has a given level of security (e.g. a level EAL5+). Unfortunately, computing devices such as personal computers or cell phones are generally very complex, which is due to the fact that they are expected to offer lots of features and to be customizable by the user, who is typically free to install all kinds of software, which may include malware. Such computing devices are sometimes certified, but in general this is mostly a marketing tool, as in general, either the conditions of the certification do not match the real conditions of use (for example certain personal computers equipped with certain operating systems are certified only as long as they are not connected to a network, while almost all computing devices with network capabilities are connected to networks), or the level of security of the certification is low. Therefore, the fact that an electronic signature is computed very securely by a signature device may be insufficient to guarantee the security of the whole signature process, as, for example, a virus could alter the data sent from the computing device to the signature device (e.g. change amounts, or bank account numbers, or names) or even completely replace data with data of its choice. The signature device, no matter how secure, would sign what it is asked to sign by the user, as long as the user authorizes the signature. In addition, the user typically authorizes the signature on the basis of what is displayed by the computing device. Since there is typically no guarantee that what is displayed is what is sent to the signature device, the security is often uncertain.

In order to solve the problem of insufficient security of computing devices in general (not specifically in the context of electronic signature computation), the TCG (trusted computing group) has defined an architecture based on a TPM (Trusted Platform Module). The TPM is a security chip (it can be based for example on a smart card chip) which is embedded in the computing device, and which authenticates different components (hardware and software components) of the computing device. Of course, the components need to support the TPM feature. Typically, the TPM may authenticate the BIOS (basic input output system), which is a low level software environment often found in computing devices, stored in non volatile memory (such as EEPROM) and which is used in particular during the boot of the computing device. The TPM may also authenticate various devices such as the hard drive, the memory, etc., so that if one device is replaced by another, it can be detected and trigger security warnings depending on the context. Similarly, the TPM can authenticate software components, such as email clients or text editors. If a virus modifies a software component (e.g. a device driver or an application such as the web browser), the TPM can detect this fact and react accordingly. The TPM is linked to the computing device (it is used to protect the computing device), no matter who uses the computing device (in the case of a shared computer, the same TPM protects the computer for all computer users). This approach is complementary with what smart cards or other portable tokens (USB security keys, etc.) can offer. Smart cards can be linked to a given user (no matter what computing device is used), so for example the signature keys of the user can be stored in a smart card and used in order to sign a document on a computing device that the user uses at work for professional purposes, as well as on a computing device owned by the user and that he uses at home for personal purposes. Different users of a given computing device can use different smart cards (each user using his own smart card) in order to sign documents on this computing device.

In the context of electronic signature, it would be conceivable to authenticate the signature device, the middleware, and the signature application residing on the computing device (such as the email client from which the user can decide to sign an email). This would increase security substantially. However, the channel between the different components involved (middleware, signature application, signature device) could still constitute a target for hacker, and there would be at least two channels to attack (the one between the middleware and the signature application, and the one between the middleware and the signature device).

It is an object of the invention to propose a Trusted Platform Module, a system and a method, for carrying out electronic signatures more securely than in state of the art.

The invention and its advantages will be explained more in details in the following specification referring to the appended drawings, in which:

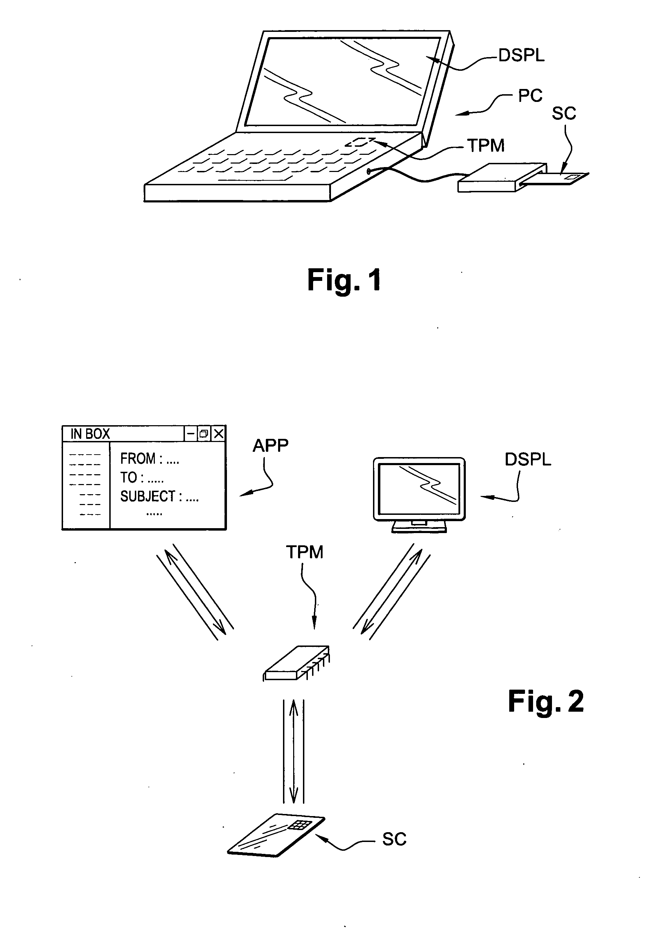

• Figure 1 represents a system according to the invention, comprising a computing device and a signature device, wherein the computing device consists of a personal computer PC, and the signature device consists of a smart card SC, wherein the smart card SC is connected to the personal computer PC thanks to a smart card reader, the personal computer PC comprising a display DSPL (in this case a typical laptop LCD) and a Trusted Platform Module TPM (in dotted lines as it is not visible from outside, since it is typically soldered or otherwise attached to the mother board of the personal computer), and
• Figure 2 is a symbolic representation of communications exchanged via secure channels between a Trusted Platform Module TPM according to the invention and other components, namely a display DSPL, a signature device SC (a smart card) and a signature application APP (in this case an email client application).

A Trusted Platform Module according to the invention is set to authenticate a signature application and to open a secure channel with the signature application. The Trusted Platform Module can be for example a chip soldered or attached to a mother board of a computing device (in order to protect it), or can be a removable device (for example in the form of a smart card) which can be inserted in a slot of the mother board, within the computing device. The signature application is typically run by the computing device which is protected by the Trusted Platform Module. The signature application can be a text editor, or an editor of any documents such as spread sheets, slides presentation, etc., or it can be an email client, or any application in which the user of the application may wish to carry out an electronic signature. In order to authenticate the signature application, state of the art techniques can be used. For example the signature application may be provided with a key, either a symmetric key shared between the signature application and the Trusted Platform Module (but this kind of key distribution schemes is typically quite complex to manage), or an asymmetric key pair, which private key is kept within the signature application, while the public key is shared at least with the Trusted Platform Module. The Trusted Platform Module can send a challenge (typically a random number) to the signature application and check whether the challenge is properly encrypted (with the expected symmetric key) or properly signed (with the expected asymmetric private key) by the signature application. If the check is successful, the signature application is authenticated to the Trusted Platform Module, and a secure channel can be opened with state of the art techniques such as for example Diffie Hellman key agreement protocol, or by generating a session key in the Trusted Platform Module and sending it to the signature application in encrypted form (e.g. encrypted with a public key of the signature application). One weakness remains, since the signature application needs to store keys in the same location as itself (e.g. in a hard drive of the computing device), which is not necessarily very secure. However, no better solution was found so far, and it is expected to be non trivial to obtain the key. This weakness is present in state of the art solutions. A technique to prevent attacks exploiting this weakness from being successful is proposed in a preferred embodiment below.

The Trusted Platform Module of the invention is further set to authenticate a signature device (such as a smart card SC, or any portable token able to carry out an electronic signature) and to open a secure channel with the signature device. In the context of the invention, a signature device is a piece of hardware (as implied by the term device), possibly comprising software (but a signature device is not a software-only component). In other words, a signature device is not defined as broadly as secure signature-creation devices are defined in directive 1999/93/EC in which a secure signature-creation device may potentially consist of a piece of software (as surprising as it may seem considering the term "device"). The authentication and secure channel opening can be carried out in a manner similar to the one described for the signature application, however, in this case, two secure hardware components (the Trusted Platform Module and the signature device) authenticate each other, which means that the keys are under control without risks of being recovered by a piece of rogue software (virus, Trojan horse, etc.) installed in the computing device.

The Trusted Platform Module further embeds a middleware in order to translate signature orders from the signature application into signature orders for the signature device. Compared to state of the art the invention removes one purely software component (the middleware layer which used to be executed in the computing device), i.e. it removes one weak point. In state of the art, three (optionally four) components were talking together: two software components consisting of the middleware and of the signature application, and one hardware component consisting of the signature device (plus optionally a fourth - hardware - component consisting of a Trusted Platform Module). Also, in state of the art solutions, there were at least two channels (between signature application and middleware, and between middleware and signature device), plus optionally three other channels (between signature application and Trusted Platform Module, between middleware and Trusted Platform Module, and between signature device and Trusted Platform Module) which altogether included at least two channels (and up to four channels) involving at least one pure software component, and which were therefore weak. The term weak means that there is (at least in theory) a possibility of attack with software means located in the computing device. According to the invention, the middleware appearing to the signature application as an API (application programming interface), and being embedded in the Trusted Platform Module, it can be considered a hardware component from a security standpoint. Therefore, the invention keeps only one weak link (between the Trusted Platform Module and the signature application) and reduces potential attacks accordingly. This is advantageous, because it was common to attack the signature device interface. The signature device interface is often standardized, for example in ISO7816-4 for most smart cards based signature devices, and can typically be spied by a USB port sniffer if the smart card is connected through a USB port. Thanks to the invention the communication from the middleware to the smart card can no longer be attacked. One potentially weak link remains (the link between the signature application and the Trusted Platform Module) for the management of the signature order. The potential attacks are further reduced by the presence of the secure channels, however as stated earlier the secure channel between the signature application and the Trusted Platform Module is not perfectly safe due to the presence of key material in the signature application. A preferred embodiment below solves this issue. In addition, it should be noted that even without implementing the preferred embodiment below, attacking this weak link between the Trusted Platform Module and the signature application requires reverse engineering the signature application in order to recover the keys required for authentication and those (if different) needed for the secure channel, which is typically harder than simply spying standard interfaces which specifications are readily available on the web using off-the-shelf debugging tools (port analyzers).

According to a preferred embodiment, the middleware embedded in the Trusted Platform Module is a PKCS#11 middleware, a CryptoAPl middleware, or an ISO 24727 middleware. An ISO/IEC 24727 compliant middleware is likely to be extremely useful in particular in deployments of e-Administration, e-Government and e-identity services.

According to a preferred embodiment, the Trusted Platform Module is set to authenticate a secure display DSPL and to open a secure channel with the secure display. The secure display can be, for example for a personal computer, a set composed of a monitor (which can be any off-the-shelf monitor, e.g. either analog or digital, either LCD or plasma or CRT, etc.), and of a display adapter, which is typically a small electronic board, plugged into the mother board of the personal computer, and into which it is proposed to embed security features described below. The security features can be embedded in the BIOS of the display adapter and in a special program to be executed by the display adapter GPU (Graphics Processing Unit). It should preferably be ensured that a piece of software in the computing device does not have the possibility to reprogram the display adapter. This can be ensured for example by using access conditions in the display adapter, or even by locking the possibility to update the display adapter, or at least the security sensitive features of the display adapter. When the computing device is a cell phone, the security display can be a set composed of the LCD of the cell phone, and of a security chip or set of security chips, which manage the interface with the LCD (i.e. no way to access the LCD otherwise than through the security chip or chips). The security chip(s) provide(s) the same features as conventional interface chip(s), plus the security features, namely the authentication and secure channel opening with the Trusted Platform Module, which can be carried out as described earlier for the signature device. The secure display being a hardware component, the security of this authentication and secure channel opening can be made high by storing the keys of the display in the display hardware and never letting the keys leave the hardware, and by using state of the art authentication and secure channel opening techniques (such as the ones mentioned above for the signature device). This is what makes the display a secure display. Then, no software attack is possible from any software installed in the computing device against the secure channel or the authentication between the display and the Trusted Platform Module. The Trusted Platform Module is additionally set to receive display orders from the signature application, to send the display orders to the secure display (in order to display the data to be signed on the secure display), and to ensure that the data displayed thanks to the display orders are the same as the data to be signed with the signature orders. Ensuring that the data are the same can be done by construction, by optimizing the commands sent to the Trusted Platform Module, for example the data can be sent only once, and the Trusted Platform Module may reroute them firstly to the secure display, and secondly to the signature device. Alternatively, the Trusted Platform Module can compute a hash of the data sent in the display orders (for example a SHA-1 hash), and a hash of the data sent in the signature orders (with the same hash algorithm). It can then check if the hashes are identical, and send signature orders to the signature device only if they are identical. It is also possible, in particular if the Trusted Platform Module has plenty of memory, to load the two sets of data (e.g. two documents), the one to be displayed and the one to be signed, which are supposed to be the same, and to compare them in the Trusted Platform Module. The embodiment with a secure display is very advantageous, as it removes any possibility of undetected attack. It is theoretically possible for an attacker to attack the link between signature application and the Trusted Platform Module. However, no matter what the attack can be, the Trusted Platform Module guarantees that what the user sees on the secure display is what the signature device signs; therefore the user can refuse to sign if he notices that the data displayed does not correspond to what he wishes to sign. The consent of the user (order to carry out the signature) is preferably carried out with hardware means (e.g. if the signature device is a USB key, it is preferably equipped with a button for confirming signature computation). Indeed, using a keyboard, or mouse, or any other input device of the computing device, which can potentially be spied and attacked by rogue software on the computing device, could lead to security issues.

In a variant, the secure display comprises a hardware switch for switching from secure display (implying a secure channel and an authentication) to normal display. Indeed, a normal display may be enough for non security sensitive applications, and may have better performances (e.g. for gaming or other applications relying intensively on graphics) since no cryptography is involved, and since the Trusted Platform Module does not have to be involved either. The user is then preferably instructed to make sure that the secure display is active when carrying out an electronic signature.

In a less secure but easier to implement alternative of the embodiments involving a secure display, instead of a secure display it is possible to use a conventional display with a secure driver. It is possible to fully manage authentication and secure channel from the driver of the display (which is typically a piece of software executing in the computing device, enabling communications between the display and the computing device). But in this less secure initiative, it would be potentially possible (although non trivial) to crack the authentication and the secure channel with a rogue software installed in the computing device which could attack the driver.

The invention also relates to a system comprising a computing device such as a personal computer PC, a cell phone, or a PDA, which are preferred computing devices in the context of the invention. The computing device can also be a server, a public kiosk, or any electronic device equipped with a user interface and which a user could use to sign documents. The system also comprises a signature device (such as a smart card SC, or any portable token comprising an electronic signature function) connected to the computing device. The computing device comprises a Trusted Platform Module TPM, a display DSPL, and a signature application APP. The signature application is set to display data to be signed with the display and to sign said data using the signature device. The Trusted Platform Module is set to authenticate the signature application and to open a secure channel with the signature application. It is also set to authenticate the signature device and to open a secure channel with the signature device. In addition, the Trusted Platform Module embeds a middleware in order to translate signature orders from the signature application into signature orders for the signature device.

The invention also relates to a method for signing data. The method comprises running a signature application APP in a computing device PC, sending data to be signed from the signature application to a display DSPL of the computing device, and to a signature device SC connected to the computing device. The method comprises authenticating the signature application to a Trusted Platform Module TPM installed in the computing device, and opening a secure channel between the signature application and the Trusted Platform Module. It also comprises authenticating the signature device to the Trusted Platform Module, and opening a secure channel between the signature device and the Trusted Platform Module, and using a middleware embedded in the Trusted Platform Module in order to translate signature orders from the signature application into signature orders for the signature device.

The embodiments described in relation to any of the three following categories, namely the Trusted Platform Module, the system, and the method, apply equally to the other two categories.

## Claims

1. A Trusted Platform Module (TPM) **characterized in that** it is set
• to authenticate a signature application (APP) and to open a secure channel with the signature application (APP),
• to authenticate a signature device (SC) and to open a secure channel with the signature device (SC),
and **in that** it embeds a middleware in order to translate signature orders from the signature application (APP) into signature orders for the signature device (SC).

2. The Trusted Platform Module (TPM) according to claim 1, wherein the middleware is a PKCS#11 middleware, a CryptoAPl middleware, or an ISO 24727 middleware.

3. The Trusted Platform Module (TPM) according to claim 1 or 2, wherein the signature device (SC) is a smart card.

4. The Trusted Platform Module (TPM) according to any previous claim, wherein the Trusted Platform Module (TPM) is set
• to authenticate a secure display (DSPL) and to open a secure channel with the secure display (DSPL),
• to receive display orders from the signature application (APP),
• to send the display orders to the secure display (DSPL), in order to display the data to be signed on the secure display (DSPL), and
• to ensure that the data displayed thanks to the display orders are the same as the data to be signed with the signature orders.

5. A system comprising a computing device (PC) and a signature device (SC) connected to the computing device (PC), wherein the computing device (PC) comprises a Trusted Platform Module (TPM), a display (DSPL), and a signature application (APP), wherein the signature application (APP) is set to display data to be signed with the display (DSPL) and to sign said data using the signature device (SC), **characterized in that** the Trusted Platform Module (TPM) is set
• to authenticate the signature application (APP) and to open a secure channel with the signature application (APP),
• to authenticate the signature device (SC) and to open a secure channel with the signature device (SC),
and **in that** the Trusted Platform Module (TPM) embeds a middleware in order to translate signature orders from the signature application (APP) into signature orders for the signature device (SC).

6. The system according to claim 5, wherein the computing device (PC) is a personal computer or a mobile phone.

7. The system according to claim 5 or 6, wherein the middleware is a PKCS#11 middleware, a CryptoAPl middleware, or an ISO 24727 middleware.

8. The system according to any of claims 5 to 7, wherein the signature device (SC) is a smart card.

9. The system according to any of claims 5 to 8, wherein the display (DSPL) is a secure display, wherein the Trusted Platform Module (TPM) is set
• to authenticate the secure display (DSPL) and to open a secure channel with the secure display (DSPL),
• to receive display orders from the signature application (APP),
• to send the display orders to the secure display (DSPL), in order to display the data to be signed on the secure display (DSPL), and
• to ensure that the data displayed thanks to the display orders are the same as the data to be signed with the signature orders.

10. A method for signing data, wherein the method comprises running a signature application (APP) in a computing device (PC), sending data to be signed from the signature application (APP)
• to a display (DSPL) of the computing device (PC), and
• to a signature device (SC) connected to the computing device (PC), the method being **characterized in that** it comprises:
• authenticating the signature application (APP) to a Trusted Platform Module (TPM) installed in the computing device (PC), and opening a secure channel between the signature application (APP) and the Trusted Platform Module (TPM),
• authenticating the signature device (SC) to the Trusted Platform Module (TPM), and opening a secure channel between the signature device (SC) and the Trusted Platform Module (TPM), and
• using a middleware embedded in the Trusted Platform Module (TPM) in order to translate signature orders from the signature application (APP) into signature orders for the signature device (SC).

11. The method according to claim 10, wherein the computing device (PC) is a personal computer or a mobile phone.

12. The method according to claim 10 or 11, wherein the middleware is a PKCS#11 middleware, a CryptoAPl middleware, or an ISO 24727 middleware.

13. The method according to any of claims 10 to 12, wherein the signature device (SC) is a smart card.

14. The method according to any of claims 10 to 13, wherein the display (DSPL) is a secure display, comprising
• authenticating the secure display (DSPL) with the Trusted Platform Module (TPM),
• opening a secure channel between the secure display (DSPL) and the Trusted Platform Module (TPM),
• receiving in the Trusted Platform Module (TPM) display orders from the signature application (APP),
• sending the display orders from the Trusted Platform Module (TPM) to the secure display (DSPL), in order to display the data to be signed on the secure display (DSPL), and
• ensuring that the data displayed thanks to the display orders are the same as the data to be signed with the signature orders.
